# EUROPÄISCHE PATENTSCHRIFT

(11) **EP 0 383 072 B1**
(45) Veröffentlichungstag und Bekanntmachung des Hinweises auf die Patenterteilung: **07.12.1994**
(21) Anmeldenummer: 90101453.0
(22) Anmeldetag: 25.01.1990
(51) Int. Cl.: G01N 21/25, G01N 21/33, G01J 1/42

(54) **Verfahren und Vorrichtung zum Messen der Strahlungsabsorption durch ein Medium**
Method and device for the measurement of the absorption of radiation through a medium
Procédé et dispositif de mesure de l'absorption de rayonnement par un milieu

(30) Priorität: 11.02.1989 DE 3904089
(43) Veröffentlichungstag der Anmeldung: 22.08.1990
(73) Patentinhaber: Krieg, Gunther, Prof.Dr.Ing., D-76227 Karlsruhe (DE); Eichler, Wolfgang, D-76327 Pfinztal (DE)
(72) Erfinder: Koukolitschek, Karl Dipl.-Ing., D-7500 Karlsruhe 21 (DE); Maier, Wilfried, D-7519 Sulzfeld (DE)
(74) Vertreter: Lempert, Jost, Dipl.-Phys. Dr. rer.nat.

(56) Entgegenhaltungen:
- EP-A- 0 244 721
- DE-A- 2 224 536
- DE-A- 3 615 259
- GB-A- 1 126 841
- US-A- 4 642 466
- ELEKTROTECHNIK, Bd. 54, 8. März 1972, WURZBURG DE, Seiten 25-26 ; HARMS : "Grundlagen und Praxis digitaler Schaltkreise"

## Beschreibung

Die Erfindung betrifft ein Verfahren zum Messen der Strahlungsabsorption durch ein Medium, wobei durch das Medium hindurchtretende Strahlung empfangen wird sowie eine Vorrichtung zur Messung der Strahlungsabsorption durch ein Medium mit mindestens einer Strahlungsquelle und mindestens einem Detektor, die durch das Medium getrennt sind.

Derartige Verfahren und Vorrichtungen sind in verschiedenartigster Weise bekanntgeworden. Sie weisen unterschiedliche Nachteile auf. So verwendet ein Teil der bekannten Vorrichtung aufwendige Optiken und insbesondere Strahlteiler, was zu einer Reduzierung der vom Empfänger empfangenen Intensität, und damit zur Reduzierung der Empfindlichkeit führt, insbesondere wenn als Strahlungsquellen Leuchtdioden verwendet werden. Zum Teil sind aufwendige Elektroniken erforderlich. Andere Vorrichtungen weisen mechanische Einrichtungen zum Einbringen verschiedenfarbiger Filter in einen Strahlengang auf, mit den mit solchen mechanischen Elementen zwangsläufig verbundenen Nachteilen, wie hoher Kosten und hoher Störanfälligkeit. Es wurde schon vorgeschlagen, mehrere Strahlungsquellen unterschiedlicher Frequenz und mehrere Detektoren zu verwenden, um Verschmutzungen und Driften von Sende- und Empfangseigenschaften sowie sonstige Störeinflüsse zu kompensieren. Ein weiterer Nachteil einer aus der Praxis bekannten Vorrichtung zur Nitratuntersuchung besteht in der Verwendung von teueren Deuteriumlampen. Diese haben nur eine sehr geringe Lebensdauer von ca. 3.000 Stunden und müssen daher halbjährlich unter hohen Kosten ersetzt werden. Aus dem Dokument GB-A- 1 126 841 ist ein Verfahren bekannt, bei welchem Strahlungsblitze extrem kurzer Dauer durch das Medium hindurchgesandt und detektiert werden.

Der Erfindung liegt daher die Aufgabe zugrunde, ein Verfahren und eine Vorrichtung der eingangs genannten Art dahingehend weiterzuentwickeln, daß eine hohe Lichtintensität bei hoher Standzeit, möglichst von mehreren Jahren, ohne Notwendigkeit zum Austausch von Komponenten einer entsprechenden Vorrichtung bei Erzielung und Einhaltung einer hohen Meßgenauigkeit erzielbar ist.

Erfindungsgemäß wird die genannte Aufgabe durch ein Verfahren der eingangs genannten Art gelöst, welches dadurch gekennzeichnet ist, daß die empfangenen Strahlungsimpulse vor ihrer Weiterverarbeitung zeitlich gedehnt werden. Eine erfindungsgemäße Vorrichtung sieht zur Lösung der Aufgabe vor, daß ein die empfangenen Blitzimpulse zeitlich dehnender Verstärker nachgeordnet ist.

Durch eine Strahlungserzeugung mittels eigentlichem "Blitzen" im engeren Sinne, also Verwendung einer Blitzlampe, kann eine hohe Lebensdauer von 10⁹ Blitzen erzielt werden. Da bei der Prozeßsteuerung im interessierenden Eingangsbereich die Werte der zu untersuchenden Medien sich nur sehr träge ändern und damit keine schnelle Prozeßsteuerung erforderlich ist, ist ebenfalls keine hohe Meßfrequenz notwendig, so daß ohne weiteres eine Lebensdauer der einzusetzenden Blitzlampen von ca. 10. Jahren erreicht werden kann. In bevorzugter Ausgestaltung werden Xenon-Blitzlampen eingesetzt, die ein breites Emissionsspektrum und insbesondere hohe Intensitäten in den zur Nitratuntersuchung relevanten Wellenlängenbereichen aufweisen. Die Durchführung der Messung mittels kurzer Blitze kann aber nicht mit herkömmlichen bekannten Verarbeitungsmaßnahmen erfolgen, da die Blitzdauer in einem Bereich von wenigen Zig-Mikrosekunden, wie typischerweise 30 Mikrosekunden, schlecht elektronisch ausgewertet werden kann. Eine umfangreiche, herkömmliche, Analogelektronik im Meßkopf, wie sie aus dem Stand der Technik bekannt ist, ist insofern nachteilig, als die beim Blitzen auftretenden starken elektromagnetischen und elektrostatischen Störfelder zu Störungen der Auswertung führen können. Es wurde daher erfindungsgemäß vorgesehen, daß die empfangenen Signale im Rahmen der Verstärkung sogleich zeitlich gedehnt werden, um anschließend unmittelbar einer digitalen Weiterverarbeitung zugeführt zu werden. Ersteres kann in einfacher und zuverlässiger Weise dadurch erreicht werden, daß der Verstärker einen eine hohe Verstärkung gewährleistenden Rückkopplungszweig aufweist. Zur Weiterverarbeitung ist vorgesehen, daß die zeitlich gedehnten Strahlungsimpulse unmittelbar nach ihrer Dehnung in ihrer Intensität entsprechende Einzelimpulse gewandelt werden (Spannungs-/Frequenzwandlung) bzw. daß dem Verstärker ein Spannungsfrequenzwandler unmittelbar nachgeordnet ist. Die spannungsfrequenzgewandelten Impulse, die durch die erfindungsgemäß vorgesehene Dehnung der kurzen Eingangssignale unmittelbar hiernach erzeugt werden können, erlauben ebenfalls eine sofortige Zählung, ohne daß Integrationen, Zwischenspeicherungen etc. erforderlich sind. Die kurzen Blitzimpulse können beispielsweise durch die genannte Verstärkung im Rahmen einer Optimierung zwischen Impulsgröße und Impulsdauer in Impulse von 4 bis 5 Volt Impulsgröße und einer Impulsdauer von ca. 1 Millisekunde umgewandelt werden, was die erwähnte Spannungsfrequenzwandlung ohne weiteres ermöglicht.

Die empfangenen Meßergebnisse können gegebenenfalls sogleich weiterverarbeitet werden, beispielsweise dadurch, daß das Zählergebnis mit einer in einem Speicher abgelegten Liste von einzelnen Zählergebnissen zugeordneten Meßwerten verglichen und der entsprechende Meßwert ausgegeben wird - zur Prozeßsteuerung oder zur Meßwertanzeige -. Zur Erhöhung der Genauigkeit kann weiterhin vorgesehen sein, daß mehrere Einzelmessungen durchgeführt und deren Mittelwert gebildet wird, wobei insbesondere ein gleitender Mittelwert gebildet wird. Insoweit können Umgebungseinflüsse zunächst als statisch fest vorgegeben berücksichtigt werden.

Das erfindungsgemäße Vorgehen ist im übrigen in Kombination mit anderen Meßverfahren möglich; so kann beispielsweise vorgesehen sein, daß die Intensität der durch das Medium hindurchtretenden Strahlung im Absorptionsbereich des Mediums in der vorstehenden erfindungsgemäßen Weise berücksichtigt wird, während beispielsweise eine Referenzstrahlung unterschiedlicher Wellenlänge, die gegebenenfalls eine Wellenlänge weit außerhalb des Absorptionsbereichs hat, mittels einer andersartigen Lampe erzeugt wird. In diesem Falle wird man in der Regel zur Abstimmung eine Kalibrierung vornehmen.

In äußerst bevorzugter Weise ist weiterhin vorgesehen, daß die Strahlungsimpulse kurzer Dauer am zu messenden Medium vorbei empfangen werden (Referenzmessung von Meß- und gegebenenfalls Referenzstrahlungen). Hierdurch können Umgebungseinflüsse, wie durch den freien Strahlungsweg von der Strahlungsquelle zum Medium und von diesem zum Detektor berücksichtigt werden, da in der Regel Strahlungsquelle und Detektor nicht direkt am Medium angeordnet sind und ausschließlich dieses durchstrahlen. Soweit es sich um ein fluides, also flüssiges oder gasförmiges Medium handelt, das durch eine Meßzelle mit transparenten Fenstern geführt werden kann, so können auch die Einflüsse dieser Fenster berücksichtigt werden, indem dann in bevorzugter Weise vorgesehen wird, daß die spannungsfrequenzgewandelten Impulse der am Medium vorbei empfangenen Strahlungsblitze bis zu einem vorgegebenen Endwert gezählt werden und die Meßdauer der spannungsfrequenzgewandelten Impulse der durch das Medium empfangenen Strahlungsblitze über eine durch die Dauer der vorgenannten Zählung bestimmte Zeitdauer, insbesondere über die gleiche Zeitdauer, durchgeführt wird und daß die Zählergebnisse aufgrund der am Medium vorbei und durch das Medium empfangenen Strahlungsblitze durcheinander dividiert und das Ergebnis mit entsprechenden abgelegten Meßwerten verglichen wird.

Eine weitere bevorzugte Ausgestaltung des Verfahrens sieht vor, daß zwischen der Messung der Lichtintensität der Blitze eine Messung der Dunkelphasen vorgenommen wird, um hierdurch alternativ durch einer Hochfrequenztaktung, wie sie bei Dauerlichtquellen verwendet wird, aber bei Blitzen nicht möglich ist, Umgebungslichteinflüsse und Dunkelstromschwankungen der Detektoren zu berücksichtigen. Diese Dunkelphaseneinflüsse werden insbesondere von beiden Detektoren aufgenommen, um diese subtraktiv bei den Meßergebnissen beider Detektoren berücksichtigen zu können.

Eine bevorzugte Weiterbildung zeichnet sich dadurch aus, daß Strahlungsblitze unterschiedlicher Wellenlänge ausgesandt und weiterverarbeitet werden, wobei insbesondere vorgesehen ist, daß jeweils die Divisionsergebnisse von Referenz- und Meßwertmessung einer Wellenlänge, gegebenenfalls unter Berücksichtigung eines Offsetwertes, ihrerseits dividiert und gegebenenfalls logarithmiert werden. Hierdurch werden, nach vorheriger Kalibrierung, relative Messungen möglich. Es kann dabei grundsätzlich vorgesehen sein, daß die Wellenlänge der beiden Strahlungsquellen einen engen Abstand voneinander aufweisen.

In bevorzugter Ausgestaltung ist aber vorgesehen, daß die Wellenlänge der Strahlungsblitze einen großen Abstand aufweisen. Die Strahlungswellenlänge außerhalb des Absorptionsbereichs des zu untersuchenden Mediums, die sogenannte Referenzmeßwellenlänge, liegt dabei insbesondere in einem Bereich, in dem weder das zu untersuchende Medium, noch andere mit diesem bei gewissen Prozessen notwendigerweise mitgeführte Medien charakteristische Absorptionsbanden aufweisen, so daß mittels der Referenzwellenlänge unvermeidliche, im Mittel konstante Absorptionsuntergrund, insbesondere auch in seiner zeitlichen Entwicklung, wie Trübung von Meßzellenfenstern etc., berücksichtigt werden kann.

Bei Verwendung von Strahlung unterschiedlicher Wellenlänge werden die entsprechenden Strahlungsblitze selbstverständlich nicht zur gleicher Zeit, sondern zeitversetzt erzeugt, wobei vorzugsweise die erwähnten Dunkelphasen zwischengeschaltet werden. Ein gesamter Meßzyklus läuft bei dieser Ausbildung vorzugsweise also derart ab, daß wechselweise Blitze der beiden Wellenlängen erzeugt werden, bis der Referenzzähler, das heißt der jeder Wellenlänge zugehörige Zähler, dem der Detektor zugeordnet ist, auf den die entsprechende Strahlung ohne Hindurchtreten durch das Medium fällt, einen vorgegebenen Wert erreicht. Solange zählen auch die Meßzähler die durch das Medium auf den entsprechenden Detektor fallende Intensitäten beider Strahlungen. Die Zählerstände werden ausgelesen und weiter verarbeitet. Da die Lichtintensität von Blitz zu Blitz unterschiedlich ist, bleibt die Anzahl der benötigten Blitze und damit auch die Meßzeit nicht konstant.

Die Auswertung der bei einer solchen Messung erreichten Meßergebnisse erfolgt nun derart, daß von den der Strahlung entsprechenden Zählwerten die entsprechenden Dunkelwertzählstände abgezogen und damit das Umgebungslicht und der Dunkelstrom des Detektors berücksichtigt wird. Anschließend wird die Extinktion des jeweiligen Meßwerts jeder Wellenlänge durch das Medium relativ zur Ausgangsintensität durch Division des Zählerstandes des oben definierten Meßzählers durch den (Maximal-) Zählerstand des Referenzzählers bestimmt. Zunächst erfolgt ein Offsetabgleich der Empfängerelektronik, anschließend wird eine Dunkelwertmessung über eine vorgegebene Zeit durchgeführt; dem schließt sich über die gleiche Zeit eine Intensitätsmessung der Strahlung der ersten Wellenlänge an. Anschließend erfolgt eine entsprechende Abfolge für die Strahlung der zweiten Wellenlänge wobei der sich ergebende Wert zur Berücksichtigung mittlerer, sich zeitlich verändernder Umgebungseinflüsse, wie Verschmutzung der Küvette, Trübung der Flüssigkeit, Änderung der Strahlungsleistung der Lichtquellen durch die entsprechenden Ergebnisse der Referenzwellenlänge (Strahlungsbereich außerhalb des Absorptionsbereich des Medium) dividiert werden und entsprechend des Lambert-Beerschen-Gesetzes eine Logarithmierung erfolgt sowie gegebenenfalls eine Offsetkorrektur zur Berücksichtigung von Unsymmetrien, Filterkorrekturen etc. erfolgen kann. Erfindungsgemäß wird also keine Messung der Intensität als momentane Lichtmenge pro Zeiteinheit, sondern eine Messung einer Lichtmenge über eine hinreichende Zeitdauer bzw. eine größere Blitzanzahl pro einzelnem Meßzyklus vorgenommen, wobei zur Ausscheidung stochastischer Abweichungen weiterhin eine Mittelung über mehrere Einzelmessungen möglich ist.

Bevorzugte Ausgestaltungen der Erfindung befassen sich mit der Ausbildung der Lichterzeugung. Hierbei kann, wie gesagt, insbesondere vorgesehen sein, daß die Blitzlampe eine Xenon-Blitzlampe ist, wobei der Glaskolben der Blitzlampe in Anpassung an den die gewünschten Längenwellenbereiche gewählt wird und bei Absorptionen der zu untersuchenden Medien im UV-Bereich vorzugsweise vorgesehen ist, daß die Blitzlampe einen UV-durchlässigen Glaskolben aufweist.

Der Vorteil der Ausgestaltung des Anspruchs 28 liegt darin, daß hierdurch eine Rückwirkung des Hochspannungsteils auf den Ansteuerteil ausgeschaltet wird. Zuverlässig wird dies durch die Ausgestaltung des Anspruchs 29 erreicht. Eine zuverlässige Zündung der Blitzlampen gewährt die Ausgestaltung des Anspruchs 31. Die Hochspannungserzeugung für die Blitzlampen erfolgt mittels eines Schaltreglers nach dem Anspruch 32.

Während bei einer Ausgestaltung mit zwei Detektoren grundsätzlich ein gemeinsamer elektronischer Verarbeitungsweg für beide Detektoren vorgesehen sein könnte, wobei dann anzunehmen wäre, daß bei den nacheinander aufgenommenen Blitzfolgen der Strahlung gleicher Wellenlänge von der Strahlungsquelle im Mittel die gleiche Lichtmenge erzeugt wurde, wird in bevorzugter Weise die Ausgestaltung des Anspruchs 35 gewählt. In diesem Falle werden von beiden Detektoren die gleichen Lichtblitze, vom einen durch das Medium geschwächt, vom anderen ungeschwächt empfangen. Die Verarbeitung erfolgt dann in bevorzugter Weise gemäß Anspruch 39.

Insgesamt wird durch die Erfindung ein Verfahren und eine Vorrichtung zur Messung der Strahlungsabsorption eines Mediums auch in bei herkömmlichen Strahlungsquellen ungünstigen Absorptionswellenlängenbereichen geschaffen, die im Gegensatz zum Stand der Technik bei einfacher und preisgünstiger Ausgestaltung eine hohe Standzeit mit über dieselbe gegebener guter Einhaltung der Meßgenauigkeit sicherstellen.

Weitere Vorteile und Merkmale der Erfindung ergeben sich aus den Ansprüchen und aus der nachfolgenden Beschreibung, in der bevorzugte Ausgestaltungen des Verfahrens und der erfindungsgemäßen Vorrichtung unter Bezugnahme auf die Zeichnung im einzelnen erläutert sind. Dabei zeigt:
- Figur 1: Eine schematische Darstellung einer bevorzugten Ausführung der erfindungsgemäßen Vorrichtung;
- Figur 2: ein vereinfachtes Schaltbild der Lampenversorgung;
- Figur 3: ein Schaltbild der Zündeinheit; und
- Figur 4: eine Empfangselektronik.

Die erfindungsgemäße Vorrichtung weist in der dargestellten Ausführungsform eine Meßzelle 1 auf. Die Meßzelle 1 besteht aus zwei durch einen Ring 3 auf Abstand gehaltenen, kreisförmigen UV-durchlässigen Quarzglasscheiben 3,4. Der so gebildete flache Zylinder ist entlang einer Diagonale durch eine axial angeordnete Scheibe 6 in zwei Kammern getrennt. Die eine Kammer weist einen Einlaß 7 und einen Auslaß 8 für die zu überwachende Flüssigkeit auf. In die andere Kammer dringt keine Flüssigkeit ein. Vorzugsweise ist sie gegen die Umgebung abgedichtet. Vor der Meßzelle 1, das heißt, auf der Seite der Scheibe 8 mit Abstand zu dieser angeordnet, befinden sich zwei Blitzlampen 11,12, die durch (nicht dargestellte) Filter Licht unterschiedlicher Wellenlängen - im dargestellten Ausführungsbeispiel zur Untersuchung von Nitraten im Wasser Licht der Wellenlänge 220 nm bzw. 270 nm - aussenden. Auf der Rückseite der Meßzelle 1, das heißt, der Seite der Abdeckscheibe 4, befinden sich zwei Strahlungsdetektoren 13,14. Die räumliche Anordnung der Lichtquellen 11,12, der Meßzelle 1 mit ihren beiden Kammern sowie der Detektoren 13,14 ist derart getroffen, daß der Detektor von den Lichtquellen 11, 12 durch den nichtflüssigkeitsdurchflossenen Teil der Meßzelle 1 bestrahlt wird, während der Detektor 14 durch den flüssigkeitsdurchflossenen Teil der Meßzelle bestrahlt wird. Vorzugsweise ist die Anordnung derart getroffen, daß der Abstand jeder der beiden Lichtquellen 11,12 zu jedem Detektor gleich ist. Die Anordnung ist derart, daß bei dargestellter horizontaler Trennscheibe 6 in der Meßzelle 1 die Lampen 11, 12 auf gleicher horizontaler Höhe angeordnet sind, während die Detektoren vertikal übereinander angeordnet sind und zwar in einer senkrechten Mittenebene zwischen den beiden Lampen 11,12. Hierdurch brauchen entfernungsabhängige Intensitätsunterschiede nicht berücksichtigt werden.

Die die Detektoren 13,14 aufweisende Empfängeranordnung E weist weiterhin hinter jedem Detektor 13,14 einen Verstärker 15,16 sowie anschließend einen Spannungs-Frequenzwandler 17,18 auf. Die Frequenzwandler 17,18 sind mit Zählern 21.1, 21.2, 22.1, 22.2 einer Auswerteeinheit A verbunden, die weiterhin einen Rechner (nicht dargestellt) sowie Ausgangsschnittstellen 23 für eine Anzeigeeinheit 24, zum Stromausgang 25 zur Prozeßsteuerung, beispielsweise zur Steuerung von Ventilen in Leitungen, deren eine einerseits potentiell nitratbelastetes, preiswertes Wasser zuführt, während die andere hochwertiges nitratfreies Wasser zuführt, wobei durch die Ventilsteuerung der Nitratwert im Mischwasser derart geregelt wird, daß er unter vorgeschriebenen Maximalwerten bleibt. Ein weiterer Ausgang des Peripheriebausteins 23 führt zur Versorgungs- und Zündstufeneinheit 26 für die Blitzlampen 11,12.

Bei den Blitzlampen 11,12 handelt es sich um Xenon-Blitzlampen mit hoher Lebensdauer, die einen UV-durchlässigen Glaskolben aufweisen.

Die Versorgung der Blitzlampen 11,12 wird von einer Ausgangsspannung U₀ von beispielsweise 15 Volt abgeleitet. Hierzu ist zunächst ein primär getakteter Schaltregler 31, der als Gegentaktwandler mit Parallellspeisung ausgeführt ist, vorgesehen. Die Erzeugung der Taktfrequenz erfolgt durch einen R-C-Oszillator eines integrierten Schaltkreises 32. Ein entsprechendes Netzwerk, bestehend aus einem Flip-Flop, NOR-Gattern und Treibertransistoren in Verbindung mit Power-MOS-Leistungsschaltern, bewirkt die wechselweise Strombeaufschlagung jeweils eines Spulenteils der Primärspule des Transformators 33. Dadurch werden auf der Sekundärseite des Transformators 33 Wechselspannungen induziert, die mittels Gleichrichter 34 am Blitzkondensator eine Aufladung auf die Betriebsspannung U_{B} der Blitzlampen bewirkt. Bei Erreichen der Betriebsspannung U_{B} wird über einen einstellbaren Spannungsteiler die Pulsbreite des Schaltreglers 31 derart zurückgeregelt, daß eine konstante Ausgangsspannung zur Versorgung der Blitzlampen und der Zündkreise bereitsteht.

Von der Betriebsspannung U_{B} für die Blitzlampen wird über den Spannungsteiler 40 die Zündspannung abgeleitet und über eine Diode 41, mittels derer eine Entladung verhindert wird, mit einem Zündkondensator 42 verbunden, der derart aufgeladen wird. Der Kondensator 42 ist über einen Thyristor 43 sowie die Primärwicklung des Zündtransformators 44 entladbar. Die Sekundärwicklung des Zündtransformators 44 ist mit der Zündelektrode 46 der Blitzlampe 12 verbunden. Die Zündung des Thyristors 43 erfolgt über Triggerimpulse, die von einer Steuereinheit, insbesondere dem oben erwähnten Rechner, erzeugt werden. Die Triggerleitungen der Steuereinheit sind über eine Optokopplereinrichtung 47 galvanisch von der Thyristoransteuerung getrennt.

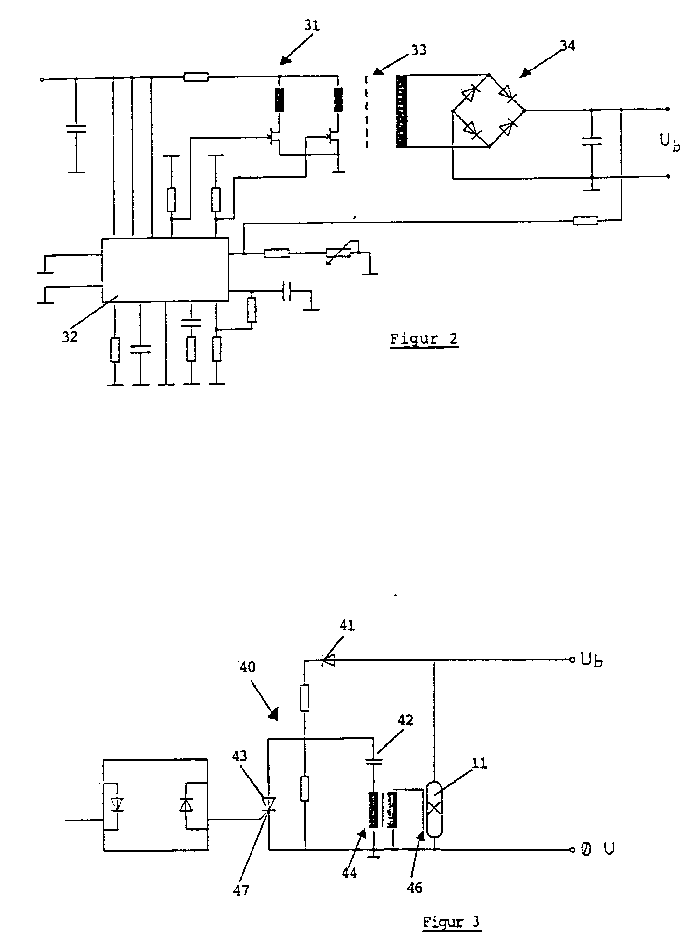

Während in der Figur 3 lediglich die Versorgung und Ansteuerung der einen Blitzlampe 11 dargestellt ist, erfolgt die Ansteuerung und Versorgung der Blitzlampe 12 von den Ausgängen der Gleichrichter 34,36 aus in der gleichen Weise.

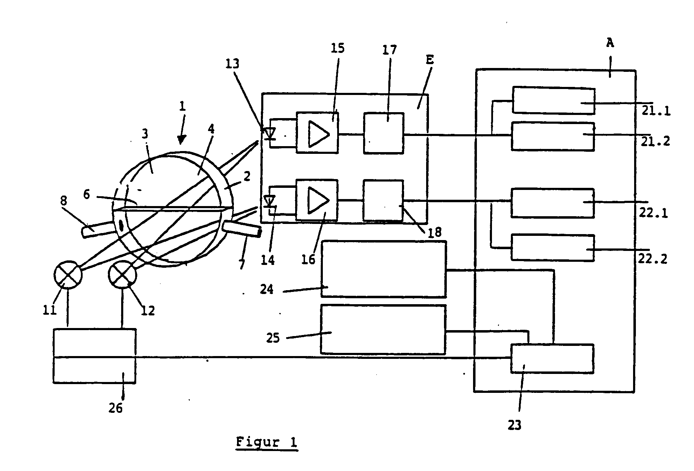

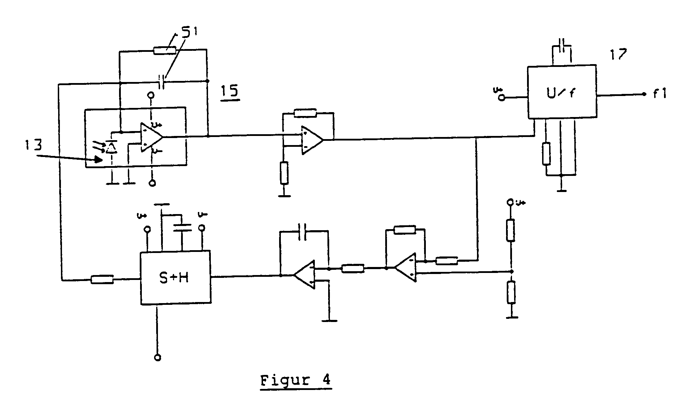

Die Empfängeranordnung ist in Figur 4 wiederum für einen Detektor (hier 13) dargestellt. Den Detektoren 13,14 sind hochverstärkende Verstärker 15,16 nachgeordnet (Fig.1). Die Verstärker 15,16 weisen RC-Glieder 51 in ihrem Rückkopplungszweig auf, mittels derer der Verstärkungsfaktor einstellbar ist. Je höher der Verstärkungsfaktor ist, desto langsamer wird der Verstärkerbaustein 15, desto größer wird also die Impulsdauer. Da diese durch die Impulshöhe reduziert wird, kann mittels der RC-Glieder 51 ein Kompromiß zwischen Impulsgröße und -dauer eingestellt werden. Vorzugsweise wird die Impulsgröße oder -höhe auf 4 bis 5 Volt eingestellt, womit sich bei üblichen Xenon-Lampen mit einer Blitzimpulsdauer von etwa 30 Mikrosekunden eine Impulsdauer am Ausgang des Verstärkers 15 in der Größenordnung von 1 Millisekunde ergibt. Derartige Ausgangsimpulse des Verstärkers 15 können ohne weiteres von den nachfolgenden Spannungs-Frequenzwandlern 17, 18 weiterverarbeitet werden.

Die Empfängeranordnung beinhaltet eine automatische Offsetspannungskompensation des Detektorbausteins und des nachfolgenden Verstärkers. Dabei wird die Eingangsspannung des V/f-Wandlers auf eine positive Spannung von ca. 10 mV während den Meßpausen eingeregelt. Bei der eigentlichen Messung wird der Strom, der zur Offsetkompensation nötig ist, mit dem Sample + Hold-Baustein (S+H) gehalten.

Die Spannungs-Frequenzwandler 17 erzeugen eine Folge von Rechteckimpulsen, wobei über die zugeordneten Kondensatoren die Maximalfrequenz einstellbar ist und beispielsweise auf 500 kHz gestellt wird. Durch die den Verstärkern zugeordneten Trimmpotentiometer können Offsetwerte der Ausgangsspannungen eingestellt werden, wodurch verhindert wird, daß bei einer eventuellen Drift die Eingangsspannung der Spannungsfrequenzwandler negativ wird. Durch die eingestellte Offsetspannung wird eine untere Ausgangsfrequenz der Spannungsfrequenzwandler bei dunklen Lampen erreicht, die beispielsweise in der Größenordnung zwischen 80 und 120 Hz liegen kann.

Die Ausgangsimpulsfolge der Spannungsfrequenzwandler kann ohne Verfälschungen über die Datenleitungen auch zu einer entfernten Steuer- und Verarbeitungseinheit A übertragen werden. Diese weist, wie schon gesagt, Zähler 21,22 auf, die die einzelnen Ausgangsimpulse der Spannungs-Frequenzwandler 17 zählen.

Der Referenzzähler 21 zählt dabei die Impulse bis zu einem vorgegebenen Wert; die bis zum Erreichen des Werts gegebene Meßzeit bestimmt damit die Meßzeit des Meßzählers 22 sowie der Messung von Dunkelperioden. Die Steuerung erfolgt durch einen Mikroprozessor.

Der Ablauf eines Meßzyklus gestaltet sich nun folgendermaßen:

Nach Zurücksetzen sämtlicher Zähler und Initialisierung des Systems werden beide Blitzlampen 11,12 mittels Triggersignalen unter Beachtung von Dunkelzeiten von etwa 20 msec wechselweise zum Blitzen gebracht. Hierdurch können Meßfehler, wie aufgrund Durchwanderns einer Gasblase durch eine zu überwindende Flüssigkeit vermieden werden, da die Gasblase bei Messungen der Blitze beider Wellenlängen erfaßt wird. Sei dies beispielsweise zunächst die Lampe 11 mit der außerhalb des Absorptionsbereichs der interessierenden Flüssigkeit liegenden, durch einen vor der Lampe angeordneter Filter, wie einen Interferenzfilter, gegebenen Referenzwellenlänge von 270 nm und eine Meßwellenlänge von z.B. 220 nm. Die Referenzwellenlänge liegt bei Nitrat vorzugsweise in einem relativen Absorptionsminimum neben der Absorptionskante vor einem weiteren relativen Absorptionsberg, der allerdings um mehrere Zehnerpotenzen kleiner ist als der Hauptabsorptionsbereich.

Die Blitzlampen werden, wie gesagt, wechselweise so lange angesteuert, bis ihr Referenzzähler 21 seinen vorgegebenen Endwert erreicht. Die Referenzzähler 21 sind dem Referenzdetektor 13 zugeordnet, auf den das Licht bzw. die Strahlung der Lampen direkt, also ohne Durchgang durch das zu untersuchende Medium trifft. Mit dem Erreichen des Endwerts der Referenzzähler 21.1 bzw. 21.2 wird die Messung für die Referenz- bzw. Meßwellenlängen abgebrochen und auch das Zählen der Meßzähler 22.1 bzw. 22.2 beendet. Die Werte der Zähler werden ausgelesen. Da bei Blitzlampen typischerweise die Lichtintensität von Blitz zu Blitz unterschiedlich ist, bleibt die Anzahl der benötigten Blitze und damit auch die Meßzeit nicht konstant, wohl aber die Relation der beiden Zählergebnisse zwischen. den Blitzen. Ebenfalls werden über Zähler die Dunkelwerte gemessen. Jede Meßperiode vor Dunkelwerten und jedem Blitz ist fest. Die Zahl ist durch die vorherige Zahl der Blitzmessungen für jede Wellenlänge bestimmt.

Die Meßzeiten eines Zyklus liegen jeweils etwa in der Größenordnung von 2 Millisekunden. Nach Abschluß eines Meßzyklus erfolgt die Auswertung der einzelnen Meßwerte. Die Meßzyklen werden hintereinander im Abstand von wenigen Zig-Millisekunden, beispielsweise im Abstand von 40 Millisekunden in einer Zahl wiederholt, die für eine Mittelwertbildung ausreicht. Es wird gegebenenfalls ein Mittelwert gebildet, auch können gleitende Mittelwerte gebildet werden. Da die zu untersuchende Konzentration sich nur langsam ändert, können zwischen den für die Mittelwertbildung erforderlichen Wiederholungen der Meßzyklen längere Pausen, beispielsweise von mehreren Sekunden, liegen. Typischerweise werden zwei Meßserien pro Minute durchgeführt. Dieser Wert kann aber auch leicht um den Faktor 5 erhöht werden. Hierdurch ergeben sich Lebensdauern für die verwendeten Xenon-Blitzlampen in der Größenordnung von mehreren Jahren, gegenüber Deuteriumlampen, die halbjährlich aufwendig ausgewechselt werden müssen.

## Patentansprüche

1. Verfahren zum Messen der Strahlungsabsorption durch ein Medium, wobei durch das Medium hindurchtretende Stahlung in Form von Strahlungsblitzen extrem kurzer Dauer hindurchgesandt und empfangen werden, dadurch gekennzeichnet, daß die empfangenen Strahlungsimpulse vor ihrer Weiterverarbeitung zeitlich gedehnt werden.

2. Verfahren nach Anspruch 1, dadurch gekennzeichnet, daß die zeitlich gedehnten Strahlungsimpulse unmittelbar nach ihrer Dehnung in ihrer Intensität entsprechende Einzelimpulse gewandelt werden (Spannungs-/Frequenzwandlung).

3. Verfahren nach Anspruch 2, dadurch gekennzeichnet, daß die Einzelimpulse über eine vorgegebene oder vorgebbare Zeit gezählt werden.

4. Verfahren nach Anspruch 3, dadurch gekennzeichnet, daß das Zählergebnis mit einer in einem Speicher abgelegten Liste von einzelnen Zählergebnissen zugeordneten Meßwerten verglichen und der entsprechende Meßwert ausgegeben wird - zur Prozeßsteuerung oder zur Meßwertanzeige.

5. Verfahren nach einem der Ansprüche 1 bis 5, dadurch gekennzeichnet, daß mehrere Einzelmessungen durchgeführt und deren Mittelwert gebildet wird.

6. Verfahren nach Anspruch 5, dadurch gekennzeichnet, daß ein gleitender Mittelwert gebildet wird.

7. Verfahren nach einem der Ansprüche 1 bis 6, dadurch gekennzeichnet, daß die Strahlungsimpulse kurzer Dauer am zu messenden Medium vorbei empfangen werden.

8. Verfahren nach Anspruch 7, dadurch gekennzeichnet, daß die spannungsfrequenzgewandelten Impulse der am Medium vorbei empfangenen Strahlungsblitze bis zu einem vorgegebenen Endwert gezählt werden und die Meßdauer der spannungs-frequenzgewandelten Impulse der durch das Medium empfangenen Strahlungsblitze über eine durch die Dauer der vorgenannten Zählung bestimmte Zeitdauer, insbesondere über die gleiche Zeitdauer, durchgeführt wird.

9. Verfahren nach Anspruch 7 oder 8, dadurch gekennzeichnet, daß die Zählergebnisse aufgrund der am Medium vorbei und durch das Medium empfangenen Strahlungsblitze durcheinander dividiert und das Ergebnis mit entsprechenden abgelegten Meßwerten verglichen wird.

10. Verfahren nach einem der vorangehenden Ansprüche, dadurch gekennzeichnet, daß zwischen Strahlungsblitzen Dunkelwertmessungen durchgeführt werden.

11. Verfahren nach Anspruch 10, dadurch gekennzeichnet, daß die Dunkelwertmessungen über eine vorgegebene bzw. vorgebbare Zeit durchgeführt werden.

12. Verfahren nach Anspruch 11 in Verbindung mit Anspruch 8, dadurch gekennzeichnet, daß die Dunkelwertmessungen über eine durch die jeweilige Meßdauer der am Medium vorbeigemessenen Blitze gegebene Zeit gemessen werden.

13. Verfahren nach einem der Ansprüche 10 bis 12, dadurch gekennzeichnet, daß die Zählergebnisse der Strahlungsmessung subtraktiv durch die Dunkelwertmeßgergebnisse korrigiert werden.

14. Verfahren nach einem der Ansprüche 1 bis 13, dadurch gekennzeichnet, daß Strahlungsblitze unterschiedlicher Wellenlänge ausgesandt und weiterverarbeitet werden.

15. Verfahren nach Anspruch 14 in Verbindung mit Anspruch 9, dadurch gekennzeichnet, daß die Division des Anspruchs 9 ihrerseits dividiert und gegebenenfalls logarithmiert wird, gegebenenfalls unter Berücksichtigung eines Offsetwertes.

16. Verfahren nach Anspruch 14 oder 15, dadurch gekennzeichnet, daß die Wellenlänge der beiden Strahlungsquellen einen engen Abstand voneinander aufweisen.

17. Verfahren nach Anspruch 16, dadurch gekennzeichnet, daß die Wellenlänge der Strahlungsblitze im Bereich der Absorptionsflanke des zu untersuchenden Mediums liegen.

18. Verfahren nach Anspruch 14 oder 15, dadurch gekennzeichnet, daß die Wellenlänge der Strahlungsblitze einen großen Abstand aufweisen.

19. Verfahren nach Anspruch 18, dadurch gekennzeichnet, daß, während die Wellenlänge eines Strahlungsblitzes im Absorptionsbereich des zu untersuchenden Mediums liegt, die Wellenlänge des anderen Strahlungsblitzes weit außerhalb des Absorptionsbereichs, insbesondere auch außerhalb des Absorptionsbereichs anderer, mit dem zu untersuchenden Medium zwangsläufig mit zu durchstrahlender Medien, liegt.

20. Verfahren nach einem der Ansprüche 7 bis 19, dadurch gekennzeichnet, daß bei in einer Meßzelle befindlichen oder durch diese strömenden Fluiden (flüssiges oder gasförmiges zu untersuchendes Medium) der am Medium vorbei empfangene Strahl durch einen vom zu untersuchenden Medium freien Bereich der Meßzelle empfangen wird.

21. Vorrichtung zur Messung der Strahlungsabsorption durch ein Medium, mit mindestens einer Strahlungsquelle und mindestens einem Detektor, die durch das Medium getrennt sind, wobei eine Strahlungsquelle eine Blitzlampe (11,12) aufweist dadurch gekennzeichnet, daß einem Detektor (13,14) ein die empfangenen Blitzimpulse zeitlich dehnender Verstärker (15,16) nachgeordnet ist.

22. Vorrichtung nach Anspruch 21, dadurch gekennzeichnet, daß der Verstärker (15,16) einen eine hohe Verstärkung gewährleistenden Rückkopplungszweig aufweist.

23. Vorrichtung nach Anspruch 21 oder 22, dadurch gekennzeichnet, daß dem Verstärker (15,16) ein Spannungsfrequenzwandler (17,18) unmittelbar nachgeordnet ist.

24. Vorrichtung nach Anspruch 23, dadurch gekennzeichnet, daß dem Spannungsfrequenzwandler (17,18) ein Zähler (21, 22) nachgeordnet ist.

25. Vorrichtung nach einem der Ansprüche 21 bis 24, gekennzeichnet durch einen Steuerrechner.

26. Vorrichtung nach einem der Ansprüche 21 bis 25, dadurch gekennzeichnet, daß die Blitzlampe eine Xenon-Blitzlampe (11,12) ist.

27. Vorrichtung nach Anspruch 26, dadurch gekennzeichnet, daß die Blitzlampe (11,12) einen UV-durchlässigen Glaskolben aufweist.

28. Vorrichtung nach einem der Ansprüche 21 bis 27, dadurch gekennzeichnet, daß die Zündansteuerung der Blitzlampen (11,12) galvanisch von ihren Triggereinrichtungen getrennt ist.

29. Vorrichtung nach Anspruch 28, dadurch gekennzeichnet daß die galvanische Trennung über Optokoppler (47) erfolgt.

30. Vorrichtung nach Anspruch 28 oder 29, dadurch gekennzeichnet, daß die galvanische Trenneinrichtung (47) eingangsseitig mit der Steuereinheit verbunden ist.

31. Vorrichtung nach einem der Ansprüche 21 bis 30, dadurch gekennzeichnet, daß die Zündung der Blitzlampen (11,12) mittels Zündthyristoren (43) durch Entladung eines Zündkondensators (42) erfolgt.

32. Vorrichtung nach einem der Ansprüche 21 bis 31, gekennzeichnet durch einen als Gegentaktwandler mit Parallelspeisung ausgestalteten, primärgetakteten Schaltregler (31) zur Erzeugung von Zünd- und Betriebsspannung der Blitzlampen (11,12).

33. Vorrichtung nach Anspruch 32, dadurch gekennzeichnet, daß die Taktung des Schaltreglers mittels eines Timers (R-C Oszillator 32) erfolgt, der durch Widerstände und Kondensatoren derart geschaltet ist, daß dem Schaltregler (31) Taktimpulse gleicher Impuls-Pausen-Dauer gewünschter Frequenz zugeführt werden.

34. Vorrichtung nach einem der Ansprüche 21 bis 33, gekennzeichnet durch einen Detektor (14), auf den die Strahlung der Strahlungsquelle (11 bzw. 12) durch das Medium fällt und durch einen Detektor (13), auf den die Stahlung der Strahlungsquelle (11,12) am Medium vorbeifällt.

35. Vorrichtung nach Anspruch 34, dadurch gekennzeichnet, daß das Medium durch eine Küvette (1) tritt, welche durch Querwand (6) in einen das Medium enthaltenden und einem anderen mediumfreien Teil getrennt ist, wobei der zweite Detektor (13) relativ zur Strahlungsquelle (11,12) derart angeordnet ist, daß die Strahlung der Strahlungsquelle (11,12) durch den mediumfreien Teil der Küvette (1) auf den Detektor (13) fällt.

36. Vorrichtung nach Anspruch 34 oder 35, dadurch gekennzeichnet, daß jedem Detektor (13,14) ein eigener, vom anderen getrennter Verarbeitungsweg bis zum zugehörigen Zähler (21,22) nachgeordnet ist.

37. Vorrichtung nach Anspruch 34 oder 35, dadurch gekennzeichnet, daß beiden Detektoren eine ihnen zeitversetzt zur Verfügung stehende, gemeinsame elektronische Verarbeitungseinheit nachgeordnet ist.

38. Vorrichtung nach einem der Ansprüche 32 oder 33, gekennzeichnet durch zwei Strahlungsquellen, die, gegebenenfalls durch ihnen unmittelbar vorgeordnete, damit zwischen ihnen und dem das Medium aufweisenden Bereich angeordnete Filter mit Durchlässigkeiten in verschiedenen Wellenlängenbereichen haben.

39. Vorrichtung nach Anspruch 38, dadurch gekennzeichnet, daß die von den Strahlungsquellen (11,12) ausgesandte Strahlung benachbarte Wellenbereiche im Bereich der Absorptionsflanke des zu untersuchenden Mediums aufweisen.

40. Vorrichtung nach Anspruch 38, dadurch gekennzeichnet, daß eine der Strahlungsquellen Strahlung im Absorptionsbereich des zu untersuchenden Mediums aussendet, die andere Strahlungsquelle Strahlung außerhalb des Absorptionsbereichs des zu untersuchenden Mediums.

41. Vorrichtung nach einem der Ansprüche 34 bis 40, gekennzeichnet durch eine die Meßergebnisse der Zähler (21,22) ins Verhältnis setzende Verarbeitungseinheit.

## Claims

1. Method for measuring the radiation absorption through a medium, the radiation passing through the medium is emitted through and received in the form of radiation flashes of extremely short duration, characterized in that the received radiation pulses are time-dilated prior to their further processing.

2. Method according to claim 1, characterized in that, immediately following their dilation, the time-dilated radiation pulses are converted into intensity-corresponding single pulses (voltage/frequency conversion).

3. Method according to claim 2, characterized in that the single pulses are counted over a predetermined or predeterminable time.

4. Method according to claim 3, characterized in that the counting result is compared with a list of measured values associated with individual counting results filed in a memory and the corresponding measured value is outputted for process control or measured value display purposes.

5. Method according to one of the claims 1 to 5, characterized in that several individual measurements are performed and their mean value is formed.

6. Method according to claim 5, characterized in that a running mean value is formed.

7. Method according to one of the claims 1 to 6, characterized in that the short duration radiation pulses are received past the medium to be measured.

8. Method according to claim 7, characterized in that the voltage-frequency-converted pulses of the radiation flashes received past the medium are counted up to a predetermined final value and the measuring duration of the voltage-frequency-converted pulses of the radiation flashes received through the medium is determined over a time period defined by the duration of the aforementioned counting and in particular over the same time period.

9. Method according to claim 7 or 8, characterized in that the counting results as a result of the radiation flashes past the medium and received by the latter are divided by one another and the result is compared with corresponding filed measured values.

10. Method according to one of the preceding claims, characterized in that dark value measurements are performed between radiation flashes.

11. Method according to claim 10, characterized in that the dark value measurements are performed over a predetermined or predeterminable time.

12. Method according to claim 11 in conjunction with claim 8, characterized in that the dark value measurements are performed over a time determined by the measuring duration of the flash measured past the medium.

13. Method according to one of the claims 10 to 12, characterized in that the counting results of the radiation measurement are subtractively corrected by dark value measuring results.

14. Method according to one of the claims 1 to 13, characterized in that radiation flashes of different wavelength are emitted and further processed.

15. Method according to claim 14 in conjunction with claim 9, characterized in that the division of claim 9 is in turn divided and optionally logarithmated, optionally taking account of an offset value.

16. Method according to claim 14 or 15, characterized in that the wavelength of the two radiation sources has a narrow spacing.

17. Method according to claim 16, characterized in that the wavelength of the radiation flashes is in the vicinity of the absorption flank of the medium to be investigated.

18. Method according to claim 14 or 15, characterized in that the wavelength of the radiation flashes has a large spacing.

19. Method according to claim 18, characterized in that whereas the wavelength of a radiation flash is in the absorption range of the medium to be investigated, the wavelength of the other radiation flash is well outside the absorption range and in particular also outside the absorption range of other media which are necessarily transilluminated with the medium to be investigated.

20. Method according to one of the claims 7 to 19, characterized in that in the case of fluids (liquid or gaseous medium to be investigated) located in or flowing through a measuring cell, the beam received past the medium is received by an area of the measuring cell free from the medium to be investigated.

21. Device for measuring the radiation absorption through a medium, with at least one radiation source and at least one detector, which are separated by the medium, one radiation source having a flash lamp (11, 12), characterized in that a detector (13, 14) being followed by an amplifier (15, 16) time-dilating the flash pulses received.

22. Device according to claim 21, characterized in that the amplifier (15, 16) has a feedback branch ensuring a high gain.

23. Device according to claim 21 or 22, characterized in that the amplifier (15, 16) is directly followed by a voltage-frequency converter (17, 18).

24. Device according to claim 23, characterized in that the voltage-frequency converter (17, 18) is followed by a counter (21, 22).

25. Device according to one of the claims 21 to 24, characterized by a control computer.

26. Device according to one of the claims 21 to 25, characterized in that the flash lamp is a xenon flash lamp (11, 12).

27. Device according to claim 26, characterized in that the flash lamp (11, 12) has a UV-transmitting glass bulb.

28. Device according to one of the claims 21 to 27, characterized in that the triggering control of the flash lamps (11, 12) is isolated from their triggering devices.

29. Device according to claim 28, characterized in that isolation takes place by means of optical couplers (47).

30. Device according to claim 28 or 29, characterized in that the isolating device (47) is connected on the input side to the control unit.

31. Device according to one of the claims 21 to 30, characterized in that the triggering of the flash lamps (11, 12) takes place by means of triggering thyristors (43) by the discharge of a triggering capacitor (42).

32. Device according to one of the claims 21 to 31, characterized by a primary-timed switching regulator (31) designed as a push-pull converter with parallel feed for producing triggering and operating voltage for the flash lamps (11, 12).

33. Device according to claim 32, characterized in that the switching regulator is timed by means of a timer (R-C oscillator 32), which is switched by resistors and capacitors in such a way that the switching regulator (31) is supplied with clock pulses of the same pulse interval duration of desired frequency.

34. Device according to one of the claims 21 to 33, characterized by a detector (14) struck by the radiation of the radiation source (11 or 12) through the medium and by a detector (13) which is struck by the radiation of the radiation source (11, 12) on the medium.

35. Device according to claim 34, characterized in that the medium passes through a cell (1), which is subdivided by a partition (6) into a part containing the medium and a medium-free part, the second detector (13) being positioned relative to the radiation source (11, 12) in such a way that the radiation of the radiation source (11, 12) through the medium-free part of the cell (1) strikes the detector (13).

36. Device according to claim 34 or 35, characterized in that each detector (13, 14) is followed by its own processing part, separated from the other one, up to the associated counter (21, 22).

37. Device according to claim 34 or 35, characterized in that the two detectors are followed by a common, electronic processing unit available thereto in time-displaced manner.

38. Device according to one of the claims 32 or 33, characterized by two radiation sources which, having transmissions different wavelength ranges, optionally through filters directly in front of them and therefore located between them and the area having the medium.

39. Device according to claim 38, characterized in that the radiation emitted by the radiation sources (11, 12) has adjacent wavelength ranges in the vicinity of the absorption flank of the medium to be investigated.

40. Device according to claim 38, characterized in that one of the radiation sources emits radiation in the absorption range of the medium to be investigated, whereas the other radiation source emits radiation outside the absorption range of the medium to be investigated.

41. Device according to one of the claims 34 to 40, characterized by a processing unit bringing into proportion the measured results of the counters (21, 22).

## Revendications

1. Procédé de mesure de l'absorption de rayonnement par un milieu, dans lequel le rayonnement incident envoyé dans le milieu est émis et capté sous forme d'éclairs de rayonnement de durée extrêmement brève, caractérisé en ce que les impulsions de rayonnement captées sont élargies en durée avant leur traitement ultérieur.

2. Procédé selon la revendication 1, caractérisé en ce que les impulsions de rayonnement à durée augmentée sont converties immédiatement après leur élargissement en intensité en impulsions individuelles (conversion tension/fréquence).

3. Procédé selon la revendication 2, caractérisé en ce que les impulsions individuelles sont comptées pendant une durée prédéteminée ou prédéterminable.

4. Procédé selon la revendication 3, caractérisé en ce que le résultat du comptage est comparé à une liste mise en mémoire comportant des valeurs enregistrées correspondant à des résultats de comptages individuels et en ce que la valeur mesurée correspondante est déterminée - en vue de la commande du processus ou de l'indication de la valeur mesurée.

5. Procédé selon l'une quelconque des revendications 1 à 4, caractérisé en ce qu'on effectue plusieurs mesures individuelles et qu'on en détermine la moyenne.

6. Procédé selon la revendication 5, caractérisé en ce qu'il en résulte une moyenne flottante.

7. Procédé selon l'une quelconque des revendications 1 à 6, caractérisé en ce que les impulsions de rayonnement de durée brève captées sont celles ne traversant pas le milieu à mesurer.

8. Procédé selon la revendication 7, caractérisé en ce que les impulsions de tension converties en fréquence des éclairs de rayonnement ne traversant pas le milieu sont décomptées jusqu'à une valeur finale prédéterminée, et en ce que la mesure des impulsions converties tension/fréquence des éclairs de rayonnement captés à travers le milieu est effectuée pendant une durée déterminée par celle du comptage précité, plus particulièrement pendant une durée identique.

9. Procédé selon l'une quelconque des revendications 7 ou 8, caractérisé en ce que les résultats des comptages concernant les éclairs de rayonnement ne traversant pas le milieu et ceux captés à travers le milieu sont divisés entre eux et en ce que le résultat est comparé aux valeurs mesurées correspondantes mises en mémoire.

10. Procédé selon l'une quelconque des revendications précédentes, caractérisé en ce qu'entre les éclairs de rayonnement on procède à des mesures d'obscurité.

11. Procédé selon la revendication 10, caractérisé en ce que les mesures d'obscurité sont effectuées pendant une durée prédéterminée ou prédéterminable.

12. Procédé selon les revendications 8 et 11, caractérisé en ce que les mesures d'obscurité sont effectuées pendant une durée déterminée par la durée de mesure de chacune des mesures portant sur les éclairs ne traversant pas le milieu.

13. Procédé selon l'une quelconque des revendications 10 à 12, caractérisé en ce que les résultats du comptage de la mesure du rayonnement sont corrigés par soustraction des résultats des mesures d'obscurité.

14. Procédé selon l'une quelconque des revendications 1 à 13, caractérisé en ce que des éclairs de rayonnement de longueurs d'onde différentes sont envoyés et font l'objet d'un traitement ultérieur.

15. Procédé selon les revendications 9 et 14, caractérisé en ce que la division de la revendication 9 est à son tour divisée et le cas échéant traitée par une fonction logarithme, éventuellement en prenant en compte une valeur décalée.

16. Procédé selon l'une quelconque des revendications 14 ou 15, caractérisé en ce que les longueurs d'onde des deux sources de rayonnement présentent un faible écart l'une par rapport à l'autre.

17. Procédé selon la revendication 16, caractérisé en ce que la longueur d'onde des éclairs de rayonnement se situe dans la zone du flanc d'absorption du milieu à analyser.

18. Procédé selon la revendication 14 ou 15, caractérisé en ce que les longueurs d'onde des éclairs de rayonnement présentent un grand écart.

19. Procédé selon la revendication 18, caractérisé en ce que la longueur d'onde de l'un des éclairs de rayonnement se situe dans la zone d'absorption du milieu à analyser et en ce que la longueur d'onde de l'autre éclair de rayonnement se situe largement à l'extérieur de la zone d'absorption, plus spécialement également en-dehors de la zone d'absorption d'autres milieux à soumettre obligatoirement au rayonnement en même temps que le milieu à analyser.

20. Procédé selon l'une quelconque des revendications 7 à 19, caractérisé en ce que dans le cas de fluides contenus dans une cellule de mesure ou circulant à travers celle-ci (milieu liquide ou gazeux à analyser), le rayon ne traversant pas le milieu est reçu dans une zone de la cellule de mesure ne contenant pas le milieu à analyser.

21. Appareil de mesure de l'absorption de rayonnement par un milieu, comprenant au moins une source de rayonnement et au moins un détecteur, séparés par le milieu, l'une des sources de rayonnement présentant une lampe à éclats (11,12), caractérisé en ce qu'un amplificateur (15,16) augmentant la durée des impulsions d'éclairs captées est monté après un détecteur (13,14).

22. Appareil selon la revendication 21, caractérisé en ce que l'amplificateur (15,16) présente une boucle de contre-réaction à forte amplification.

23. Appareil selon l'une quelconque des revendications 21 ou 22, caractérisé en ce qu'immédiatement après l'amplificateur (15,16) est monté un convertisseur tension/fréquence (17,18).

24. Appareil selon la revendication 23, caractérisé en ce qu'un compteur (21,22) est monté après le convertisseur tension/fréquence (17,18).

25. Appareil selon l'une quelconque des revendications 21 à 24, caractérisé par un calculateur de commande.

26. Appareil selon l'une quelconque des revendications 21 à 25, caractérisé en ce que la lampe à éclats est une lampe à éclats au xénon (11,12).

27. Appareil selon la revendication 26, caractérisé en ce que la lampe à éclats (11,12) présente une ampoule transparente aux rayons ultra-violets.

28. Appareil selon l'une quelconque des revendications 21 à 27, caractérisé en ce que la commande d'amorçage des lampes à éclats (11,12) est isolée galvaniquement de leur système de déclenchement.

29. Appareil selon la revendication 28, caractérisé en ce que l'isolation galvanique se réalise par opto-coupleur (47).

30. Appareil selon l'une quelconque des revendications 28 ou 29, caractérisé en ce que le dispositif d'isolation galvanique (47) est relié au niveau de l'entrée à l'unité de commande.

31. Appareil selon l'une quelconque des revendications 21 à 30, caractérisé en ce que l'amorçage des lampes à éclats (11,12) se réalise au moyen d'un thyristor d'amorçage (43) par décharge d'un condensateur d'amorçage (42).

32. Appareil selon l'une quelconque des revendications 21 à 31, caractérisé par un régulateur de commutation (31) à cadencement primaire, conformé en convertisseur push-pull à alimentation parallèle, destiné à générer la tension d'amorçage et de service des lampes à éclats (11,12).

33. Appareil selon la revendication 32, caractérisé en ce que le cadencement du régulateur de commutation s'effectue au moyen d'un oscillateur RC 32, couplé par des résistances et des condensateurs de façon que des impulsions de cadencement, identiques en durée et en repos et à la fréquence souhaitée, soient fournies au régulateur de commutation (31).

34. Appareil selon l'une quelconque des revendications 21 à 33, caractérisé par un détecteur (14) sur lequel le rayonnement de la source de rayonnement (11 ou 12) arrive à travers le milieu, et par un détecteur (13) sur lequel le rayonnement de la source de rayonnement (11,12) arrive sans traverser le milieu.

35. Appareil selon la revendication 34, caractérisé en ce que le milieu traverse une cuvette (1), séparée par une paroi transversale (6) en une partie contenant le milieu et une autre partie ne le contenant pas, le deuxième détecteur (13) étant monté par rapport à la source de rayonnement (11,12) de façon que le rayonnement de la source de rayonnement (11,12) arrive au détecteur (13) en traversant la partie de la cuvette (1) ne contenant pas de milieu.

36. Appareil selon l'une quelconque des revendications 34 ou 35, caractérisé en ce que chaque détecteur (13,14) est relié à son compteur (21,22) par un chemin de traitement qui lui est propre, séparé des autres.

37. Appareil selon l'une quelconque des revendications 34 ou 35, caractérisé en ce qu'après les deux détecteurs est affectée à ceux-ci une unité commune de traitement électronique à décalage de phase.

38. Appareil selon l'une quelconque des revendications 32 ou 33, caractérisé en ce que deux sources de rayonnement sont réalisées, le cas échéant, par des filtres transparents sur la plage des différentes longueurs d'ondes et disposés directement devant ces sources, c'est-à-dire entre ces sources et le milieu.

39. Appareil selon la revendication 38, caractérisé en ce que les rayonnements émis par les sources de rayonnement (11,12) présentent des gammes d'ondes voisines dans la zone du flanc d'absorption du milieu à analyser.

40. Appareil selon la revendication 38, caractérisé en ce qu'une des sources de rayonnement émet un rayonnement dans la zone d'absorption du milieu à analyser, l'autre source de rayonnement émettant un rayonnement à l'extérieur de la zone d'absorption du milieu à analyser.

41. Appareil selon l'une quelconque des revendications 34 à 40, caractérisé par une unité de traitement comparant les résultats de mesure des compteurs (21,22).
